# EUROPÄISCHE PATENTSCHRIFT

(11) **EP 2 439 033 B1**
(45) Veröffentlichungstag und Bekanntmachung des Hinweises auf die Patenterteilung: **18.06.2014**
(21) Anmeldenummer: 11183020.4
(22) Anmeldetag: 28.09.2011
(51) Int. Cl.: B29B 11/14, B29C 45/37, B29C 49/06, B29B 11/08

(54) **Maschinenlesbarer Kunststoffvorformling sowie Spritzgussform**
Machine readable plastic preform and injection mould
Préform en matériau plastique lisible sur machine et moule à injection

(30) Priorität: 07.10.2010 DE 102010047616
(43) Veröffentlichungstag der Anmeldung: 11.04.2012
(73) Patentinhaber: Krones AG, 93073 Neutraubling (DE)
(72) Erfinder: Hüttner, Gerald, 92249 Vilseck (DE)
(74) Vertreter: Bittner, Bernhard

(56) Entgegenhaltungen:
- EP-A1- 2 110 224
- EP-A1- 2 189 267
- JP-A- 58 042 437
- JP-A- 2007 175 994
- US-A- 5 462 278
- US-A1- 2008 265 461
- US-B2- 6 769 895

## Beschreibung

Die vorliegende Erfindung bezieht sich auf einen Kunststoffvorformling. Derartige Kunststoffvorformlinge sind aus dem Stand der Technik seit langem bekannt und dienen beispielsweise dazu, um im Rahmen von Blasvorgängen, insbesondere Streckblasvorgängen, zu Kunststoffbehältnissen (beispielsweise zu Getränkeflaschen) umgeformt zu werden.

Derartige Blasformmaschinen, beispielsweise Streckblasmaschinen, arbeiten üblicherweise mit unterschiedlichen Parametern wie beispielsweise Blasparametern. Diese Parameter hängen dabei auch von dem umzuformenden Kunststoffbehältnis ab. Viele Getränkeabfüller und Konverter benutzen verschiedene Kunststoffvorformlinge zur Herstellung von ein und demselben Behälter. Dies ist jedoch mit Parameteranpassungen im Blas- und Heizprozess verbunden. Unter Umständen können sich in der Anlage noch Kunststoffvorformlinge befinden, die nicht zu dem speziellen Prozess gehören. Dies kann wiederum zu Störungen in der Linie kommen, insbesondere dann, wenn ein falscher Kunststoffvorformling nicht erkannt und nicht entsprechend von einer Blasmaschine ausgeschleust wird.

Die JP 2007 175 994 A beschreibt einen Kunststoffvorformling und ein Behältnis, welches aus diesem Kunststoffvorformling gefertigt ist. Dabei weist dieser Kunststoffvorformling eine Markierung auf.

Die EP 2 189 267 A1 beschreibt ein Verfahren zur Herstellung eines extrusionsblasgeformten Hohlkörpers. Dabei ist ein Kunststoffvorformling mit einem RFID-Chip versehen.

Die US 6.769,895 B2 beschreibt eine Maschine zum Blasformen von Behältnissen. Diese Maschine weist eine Einrichtung zum Orientieren der Kunststoffvorformlinge in der Blasform auf.

Der vorliegenden Erfindung liegt daher die Aufgabe zugrunde, einen Kunststoffvorformling zur Verfügung zu stellen, der eine bessere und ggfs. automatisierte Anpassung einer Blasmaschine und insbesondere einer Streckblasmaschine ermöglicht.

Dies wird erfindungsgemäß durch einen Kunststoffvorformling nach Anspruch 1 erreicht. Die Herstellung derartiger Vorformlinge ist mittels einer Spritzgußform nach Anspruch 11 möglich. Vorteilhafte Ausführungsformen und Weiterbildungen sind Gegenstand der Unteransprüche.

Ein erfindungsgemäßes Kunststoffbehältnis und insbesondere ein Kunststoffvorformling weist einen Grundkörper auf, sowie einen an dem Grundkörper angeordneten Gewindebereich, wobei der Gewindebereich einteilig mit dem Grundkörper ausgebildet ist. Weiterhin weist der Grundkörper einen diesen abschließenden Kuppenbereich auf.

Erfindungsgemäß weist der Kunststoffvorformling eine Markierung auf, welche für wenigstens eine Eigenschaft des Kunststoffvorformlings charakteristisch ist,

Bevorzugt weist das Kunststoffbehältnis einen wenigstens abschnittsweise ringförmigen Abschnitt auf, der unterhalb des Gewindebereichs angeordnet ist und sich besonders bevorzugt in einer radialen Richtung des Kunststoffbehältnisses nach außen erstreckt und der besonders bevorzugt ebenfalls einteilig mit dem Grundkörper ausgebildet ist. Dabei weist vorteilhaft der ringförmige Abschnitt eine erste dem Grundkörper zugewandte Oberfläche und eine zweite dem Gewindebereich zugewandte Oberfläche auf. Unter einer dem Grundkörper bzw. dem Gewindebereich zugewandten Oberfläche wird dabei insbesondere verstanden, dass eine senkrecht auf dieser Oberfläche stehende Richtung in Richtung des Grundkörpers bzw. des Gewindebereichs weist.

Die Markierungen können an jeder beliebigen Stelle der Außenoberfläche, wie auch der Innenoberfläche des Kunststoffvorformling angebracht sein, insbesondere zwischen den Gewindegängen, zwischen Gewinde und Tragring, aber auch an der Innenseite des Kunststoffvorformlings oder an dem nicht verstreckbaren Abschnitt des Grundkörpers des Kunststoffvorformlings kann eine Markierung erfolgen. Ebenso kann der Grundkörper vollumfänglich, sowohl an dessen verstreckbaren, als auch an dessen nicht verstreckbaren Bereichen eine Markierung erfahren.

Vorteilhaft ist diese Markierung an einem in einer Längsrichtung des Kunststoffvorformlings unterhalb des Gewindebereichs liegenden Oberflächenabschnitt des Kunststoffvorformlings angeordnet, wobei sich dieser Oberflächenabschnitt vorteilhaft in einem von 0° abweichenden Winkel bezüglich der Längsrichtung des Kunststoffvorformlings erstreckt. Vorzugsweise erstreckt sich der Oberflächenabschnitt gegenüber der Längsrichtung unter einem Winkel, der bei wenigstens 20°, bevorzugt bei wenigstens 40°, bevorzugt bei wenigstens 50° und besonders bevorzugt bei wenigstens 60 ° liegt. Es wird darauf hingewiesen, dass die vorliegende Erfindung auch auf andere Kunststoffbehältnisse wie insbesondere Kunststoffflaschen anwendbar ist.

Es wird daher erfindungsgemäß vorgeschlagen, den Kunststoffvorformling mit einer Markierung zu versehen, welche Aufschluss über eine Eigenschaft des Kunststoffvorformlings gibt. Beispielsweise kann eine entsprechende Markierung oder Kodierung des Kunststoffvorformlings ein Herstelldatum oder hierfür charakteristische Daten enthalten und damit Aufschluss über das Alter des Kunststoffvorformlings geben und eine Maschine kann die Heiz- und Blastemperatur selbstständig nachstellen. Vorzugsweise kann eine derartige Markierungserkennung vor dem Einlauf in den Ofen platziert werden, damit die Maschine rechtzeitig reagieren kann.

Eine derartige geeignete Position für eine Erkennung wäre beispielsweise auf einer Zuführschiene, damit gewährleistet werden kann, dass der Kunststoffvorformling noch vor der Erwärmung ausgeschleust werden kann. Ist die Ausschleusung geschickt ausgeführt, können auch Lücken in der Heizeinrichtung vermieden werden, was die Anlage noch effizienter gestaltet.

Wie erwähnt, handelt es sich vorzugsweise bei dem Kunststoffbehältnis um einen Kunststoffvorformling. Es wäre jedoch auch möglich, dass ein fertig hergestelltes Kunststoffbehältnis wie eine Kunststoffflasche oder auch Kanister oder dergleichen eine derartige Markierung aufweisen. Auch fallen Kunststoffvorformlinge ohne ringförmigen Körper unter den Begriff.

Durch die vorteilhafte Anbringung der Markierung an einem von der Längsrichtung des Behältnis abweichenden Abschnitt, und damit gerade nicht an dem sich in Längsrichtung erstreckenden Grundkörperabschnitt wird erreicht, dass die Markierung durch eine Beobachtung entlang der Längsrichtung des Kunststoffvorformlings unabhängig von der jeweiligen Drehstellung des Kunststoffvorformlings erkannt werden kann.

Bevorzugt ist dabei der besagte Oberflächenabschnitt ein Bestandteil der ersten Oberfläche, des Kuppenbereichs oder der zweiten Oberfläche. Auf diese Weise ist in besonders einfacher Weise eine Erkennung der besagten Markierung möglich.

Bei einer weiteren vorteilhaften Ausführungsform ist die Markierung mittels einer Beobachtungseinrichtung beobachtbar, welche den Kunststoffvorformling in dessen Längsrichtung beobachtet. Eine derartige Beobachtungseinrichtung wurde in der von der Anmelderin zeitgleich mit der vorliegenden Anmeldung eingereichten Patentanmeldung mit dem Titel "Kunststoffvorformlinge mit Markierung zur Lageerkennung" beschrieben. Der Offenbarungsgehalt dieser Anmeldung wird hiermit durch Bezugnahme vollständig auch zum Offenbarungsgehalt der vorliegenden Anmeldung gemacht.

Bei einer weiteren vorteilhaften Ausführungsform ist die Markierung eine in einem Oberflächenabschnitt ausgebildete Ausnehmung oder Erhebung. Grundsätzlich wäre es auch möglich, die Markierung nachträglich beispielsweise mittels eines Druckers oder Lasers einzubringen, vorteilhaft wird jedoch die Markierung in mechanischer Weise und besonders bevorzugt bereits beim Spritzgießvorgang hergestellt. Insbesondere handelt es sich bei der Markierung um eine in dem besagten Abschnitt angebrachte Ausnehmung.

Vorteilhaft erstreckt sich diese besagte Ausnehmung (falls sie an der ersten Oberfläche des Tragrings angeordnet ist) nicht bis zu der zweiten Oberfläche. Damit ist die Markierung hier nur an der Unterseite des ringförmigen Abschnittes bzw. Tragrings angeordnet. Gleichwohl ist auf diese Weise die Markierung optisch gut zugänglich, wobei eine Erfassung der Markierung insbesondere nicht durch Greifelemente und auch nicht durch das Gewinde des Kunststoffvorformlings gestört wird. Dadurch, dass die Markierung vorteilhaft nicht durch den ringförmigen Körper bzw. Tragring durchgeht, weist der Tragring an seiner zweiten Oberfläche eine ungestörte Dichtfläche auf, was insbesondere für den nachfolgenden Blasvorgang vorteilhaft ist.

Vorteilhaft ist der ringförmige Abschnitt wenigstens abschnittsweise unpoliert und ist vorteilhaft vollständig unpoliert. Üblicherweise werden die Kunststoffvorformlinge an ihrer Oberfläche und auch an der Oberfläche des besagten Tragrings poliert. Bei der vorliegenden Ausführungsform ist es jedoch vorteilhaft, bewusst die besagte Oberfläche unpoliert zu lassen. Auf diese Weise ist es möglich, dass die Durchsicht auf einen Hintergrund von dem Grundkörper des Kunststoffvorformlings her eingeschränkt ist und auf diese Weise eine verbesserte Sichtbarkeit an kritischen Stellen der Anlage, wie beispielsweise Kanten einer Greifklammer gewährleistet ist. Es wäre jedoch umgekehrt auch möglich, dass der Tragering poliert und die Kerbe bzw. Markierung matt ist.

Vorteilhaft weichen die Seitenflächen der Markierung sowohl stark von der Horizontalen als auch von der Vertikalen ab. Sie sind z. B. V-förmig. Dadurch sind die Seitenflächen der Markierung bei der vorzugsweise nahezu vertikalen Beobachtungsrichtung einerseits groß im Bild zu sehen. Andererseits erfüllen sie, im Gegensatz zur horizontalen Tragringfläche, nicht mehr die Reflexionsbedingung zwischen Beleuchtungs- und Beobachtungsrichtung. Dadurch erscheinen die Markierungen dunkel auf dem reflektierenden Tragering. Vorteilhaft, zur Verstärkung des Effektes, kann die Markierung noch poliert werden. Auf diese Weise ist eine sehr gute Erfassung der Markierung mit optischen Bildaufnahmeeinrichtungen möglich.

Wie erwähnt, ist die Tragringunterseite des Kunststoffvorformlings vorteilhaft mattiert, das heißt, die Oberfläche weicht feinkörnig leicht von der Horizontalen ab. Die Vorzüge, die sich hierdurch ergeben, liegen darin, dass eine derartige Oberfläche die harten Reflexionsbedingungen zwischen einer Beleuchtungs- und einer Beobachtungsrichtung abmildern. Dadurch wird der Reflex körniger, dafür jedoch gleichmäßig hell. Die Markierung bzw. Kerbe hebt sich in diesem Fall besonders gut ab.

Weiterhin wird die Sicht durch den Tragring des Kunststoffvorformlings nebelig gestört und dadurch wird der Einfluss von Störungen hinter dem Tragring, wie sie sich durch die Haltezange und die Gewinde und die Umgebung ergeben können, reduziert. Auf diese Weise wird das Bild besser auswertbar.

Daneben spart die besagte raue Oberfläche auch Kosten bei der Herstellung. Die Spritzwerkzeuge, mit denen der Kunststoffvorformling hergestellt wird, sind üblicherweise rau, wobei die ersten Bearbeitungsschritte mit gröberen Werkzeugen vorgenommen werden. Um eine hochglänzende Oberfläche zu erzeugen sind teure zeitaufwendige Polierverfahren notwendig. Diese Verfahren können im Bereich des Tragrings des Kunststoffvorformlings eingespart werden und gerade hierdurch wird der Kunststoffvorformling besser inspizierbar.

Es wäre weiterhin auch möglich, mehrere Markierungen bzw. Kodierungen an dem Kunststoffvorformling anzubringen. Neben einer Markierung an der Unterseite des Tragrings können auch an anderen Oberflächen, wie beispielsweise unterhalb der Mündung derartige Markierungen angebracht werden. Derartige Kodierungen können beispielsweise durch eine oder mehrere Linien wie Kerben oder durch die geometrische Ausgestaltung einer derartigen Kerbe ausgebildet sein. Daneben können auch anstelle von radialen Kerben andere Strukturen, beispielsweise mit schrägen Seitenflanken vorgesehen sein, wie beispielsweise pyramiden oder kegelförmige Vertiefungen. Diese Kodierungen können ebenfalls für eine Orientierung des Kunststoffvorformlings genutzt werden.

Auf diese Weise kann ein "maschinenlesbarer" Kunststoffvorformling zur Verfügung gestellt werden. Dabei kann die Behandlungsmaschine anhand dieses (insbesondere am Tragring angebrachten) Codes den Kunststoffvorformling zuordnen und ggfs. auf den Kunststoffvorformling reagieren. So kann die Maschine geeignete Maßnahmen einleiten wie beispielsweise eine Ausschleusung des Kunststoffvorformlings, eine Anpassung von Bearbeitungsparametern, eine Orientierung des Kunststoffvorformlings und dergleichen.

Bei einer weiteren vorteilhaften Ausführungsform umgibt der ringförmige Körper den Kunststoffvorformling vollständig und ist ohne in Längsrichtung des Kunststoffvorformlings durchgehende Ausnehmungen ausgebildet. Auf diese Weise wird - wie oben erwähnt - die Blasbarkeit in einem nachfolgenden Umformungsprozess erleichtert.

Unter einem ringförmigen Körper bzw. Abschnitt wird ein Bereich verstanden, der hier beispielsweise eine geometrische Längsache vollständig umgibt. Dabei kann dieser ringförmige Abschnitt kreisrund ausgebildet sein, es wäre jedoch auch möglich, dass der Abschnitt beispielsweise oval und/oder polygonal ausgebildet ist. Vorzugsweise weist der ringförmige Abschnitt in der radialen Richtung eine konstante Breite auf, es wäre jedoch auch möglich, dass die radiale Breite dieses ringförmigen Abschnitts in der Umfangsrichtung des Kunststoffvorformlings variiert.

Vorteilhaft handelt es sich bei dem ringförmigen Abschnitt um einen vollständig ausgebildeten ringförmigen Körper, der vorteilhaft umlaufend einheitlich ausgebildet ist. Daneben wäre es jedoch auch möglich, dass sich der ringförmige Körper leicht schräg bezüglich der radialen Richtung erstreckt. Vorteilhaft erstreckt sich jedoch der ringförmige Körper im Wesentlichen genau in der besagten radialen Richtung.

Bei einer weiteren vorteilhaften Ausführungsform ist das Kunststoffbehältnis ein Spritzgießteil. Dabei ist es möglich, dass die besagte Markierung bereits während des Spritzvorgangs in den Kunststoffvorformling mit eingearbeitet wird.

Bei einer weiteren vorteilhaften Ausführungsform streckt sich der ringförmige Abschnitt in der radialen Richtung des Kunststoffbehältnisses über den Gewindebereich hinaus. Auf diese Weise wird in einem Umformungsprozess die Abdichtung mittels einer Blasdüse erleichtert.

Bei einer weiteren vorteilhaften Ausführungsform ist die besagte Markierung nur an der ersten Oberfläche angeordnet, ggf. aber auch von oben wahrnehmbar.

Bei einer weiteren vorteilhaften Ausgestaltung ist das Kunststoffbehältnis wenigstens teilweise transparent. Unter wenigstens teilweise ist hierbei zu verstehen, dass einerseits einzelne geometrische Bereiche des Kunststoffvorformlings transparent ausgebildet sein können, es wäre jedoch auch möglich, dass unter teilweise transparent eine gewisse Transparenz, beispielsweise eine 60- oder 50% -ige Transparenz oder eine transparente Farbe zu verstehen ist.

Sind in dem Material des Kunststoffvorformlings stark streuende Teilchen enthalten, die den Kunststoffvorformling undurchsichtig bzw. diffus machen, dann überwiegt die diffuse Streuung. Strukturen wie nicht durchgehende Kerben, die die Reflexionseigenschaften ausnutzen, sind dann nicht mehr so gut sichtbar. Da die diffuse Streuung meist sehr hell ist, wird der Abstand zu den Störungen des Hintergrundes größer. Diese diffuse Streuung verleiht dem Kunststoffvorformling dann ein sehr gleichmäßiges Aussehen. In diesem Fall wird bevorzugt eine (durch den Tragring) durchgehende Markierung bzw. Kerbe verwendet. Bevorzugt ist jedoch eine derartige durchgehende Kerbe bzw. Ausnehmung nur an dem radial äußeren Rand des Kunststoffvorformlings vorgesehen und reicht daher insbesondere nicht bis an den Grundkörper des Kunststoffvorformlings heran. Auf diese Weise verbleibt an dem Tragring ausreichend Platz für dessen Abdichtung innerhalb der Blasmaschine bzw. während des Blasprozesses.

Damit die Maschine erkennt, welcher Kunststoffvorformling sich in der Maschine befindet, ist, wie erwähnt, auf dem Kunststoffvorformling eine Markierung in der Art eines Codes abgebildet. Dieser Code kann in Form von einer oder mehreren Linien (z. B. Kerben) oder der geometrischen Ausführung einer Kerbe oder Linie sein. Auch kann die Markierung bzw.der Code zu einer Orientierung des Kunststoffvorformlings (bzgl. seiner Längsachse) genutzt werden. So wäre es beispielsweise möglich, beliebige Markierungen bzw. Codes wie beispielsweise 2-D Codes, Strichcodes oder RFID - Codes optisch zu erfassen und hierdurch auf die Drehstellung des Kunststoffvorformlings zu schließen.

Markierungen im Sinne der vorliegenden Anmeldung sind jedwede Art an Codierung. Vorzugsweise 2-D Codes, Strichcodes, aber auch kontaktlose Codierung, insbesondere RFID können zur Verfügung stehen. Bei Letzterer sollte beim Spritzverfahren RFID in entsprechenden Formen zur Verfügung gestellt werden, sodass dieses in den Preform eingespritzt werden kann. Vorteilhaft handelt es sich bei der Markierung um eine optisch auslesbare Markierung.

Anhand des maschinenlesbaren Kunststoffvorformlings kann die Maschine den Kunststoffvorformling zuordnen und ggfs. darauf reagieren. Mögliche Maßnahmen wären beispielsweise eine Ausleitung des Kunststoffvorformlings, eine Parameteranpassung, eine Orientierung und dergleichen.

Bei einer weiteren vorteilhaften Ausführungsform ist die charakteristische Eigenschaft aus einer Gruppe von Eigenschaften ausgewählt, welche geometrische Daten des Kunststoffvorformlings, wie beispielsweise dessen Länge, Höhe, Gewindedurchmesser, Gewindesteigung und dergleichen, ein Gewicht des Kunststoffvorformlings, ein Material des Kunststoffvorformlings (wie beispielsweise einen Resin -Typ), eine Farbe des Kunststoffvorformlings, ein Herstellungsdatum des Kunststoffvorformlings, einen Hersteller des Kunststoffvorformlings, einen Rohstoff des Kunststoffvorformlings, maschinenbezogene Freigabeinformationen (die Information, ob der Kunststoffvorformling für eine bestimmte Maschine freigegeben ist -beispielsweise wenn der Mutterkonzern von den Abfüllern einen bestimmten Typ vorschreibt-) Kombinationen hieraus oder dergleichen enthält).

Vorteilhaft ist die Markierung in einem zu verstreckendem oder einem nicht zu verstreckendem Bereich des Kunststoffvorformlings angeordnet. Der Vorteil in der Anordnung an einem zu verstreckenden Bereich besteht darin, dass die Markierung nach der Herstellung des Kunststoffvorformlings (durch den Verstreckungsvorgang) verschwindet. Der Vorteil einer Anordnung der Markierung an einem nicht zu verstreckendem Bereich bedeutet, dass die Markierung dauerhaft an einem Kunststoffvorformling bleibt, was den Vorteil mit sich bringt, dass auch die anschließend aus dem Vorformling hergestellte Kunststoffflasche über diese Markierung identifizierbar bleibt.

Bei einer weiteren vorteilhaften Ausführungsform ist wenigstens ein Teil der Markierung zur Feststellung einer Drehstellung des Kunststoffvorformlings bezüglich seiner Längsachse geeignet bzw. dient hierzu. Wenn ein entsprechendes Erfassungssystem zwischen einem Blasrad und einem Teilungsverzugsstern angeordnet ist, so kann auch die Lage des Anspritzpunktes zum Tragring bei dem beheizten Kunststoffvorformling ermittelt werden.

Die vorliegende Erfindung bezieht sich weiterhin auf eine Spritzgußform zum Herstellen eines Kunststoffvorformlings der oben beschriebenen Art. Diese Spritzgußform weist dabei wenigstens drei Formteile auf, welche einen Aufnahmeraum zur Aufnahme eines zu formenden Materials ausbilden, sowie einen Gewindeerzeugnisabschnitt zur Erzeugung eines Gewindebereichs des Kunststoffvorformlings und einen zwischen wenigstens zwei Formteilen angeordneten Formkörper zur Erzeugung des Hohlraums des Kunststoffvorformlings. Dabei ist das zu formende Material zwischen den Formteilen und dem Formkörper einführbar, um eine Wandung des Kunststoffvorformlings auszubilden.

Erfindungsgemäß ist in wenigstens einem Formteil und/oder dem

Gewindeerzeugnisabschnitt ein Stempelelement angeordnet, welches zur Erzeugung der oben erwähnten Markierung geeignet ist bzw. welches die besagte Markierung in eine Aussenoberfläche des Kunststoffvorformlings prägt. Bevorzugt dient eines der Formteile zur Erzeugung des Kuppenbereichs der Kunststoffvorformlinge und besonders bevorzugt ist in diesem Bereich das Stempelelement angeordnet.

Dabei ist besonders bevorzugt dieses Stempelelement entfernbar in dem besagten Formteil angeordnet. So kann beispielsweise in einem Bodenstück der Spritzgußform durch Einsatz von verstellbaren Schriftstempeln ein Code generiert werden. Dieser kann beispielsweise für ein Datum oder eine Charge stehen, wobei diese Schriftstempel leicht austauschbar und veränderbar sind.

Da der besagte Markierungsstempel ausgetauscht werden kann, sind auch Strichcodes oder eine Matrix kostengünstig zu realisieren da hierfür nicht eine neue Kavität benötigt wird.

Diese maschinenlesbaren Preforms können auch in Multi-Produkt-Linien Einsatz finden, indem beispielsweise, aufgrund der Markierung, das entsprechende Produkt abgefüllt wird (bei nicht verstreckten Markierungen).

Weitere vorteilhafte Ausführungsformen ergeben sich aus den Unteransprüchen.

Weitere Vorteile und Ausführungsformen ergeben sich aus den beigefügten Zeichnungen. Darin zeigen:
- Fig. 1: eine Seitenansicht eines erfindungsgemäßen Kunststoffvorformlings;
- Fig. 2: eine perspektivische Ansicht eines erfindungsgemäßen Kunststoffvorform-lings;
- Fig. 3: eine schematische Darstellung eines Spritzgußwerkzeugs; und
- Fig. 4: eine Detaildarstellung des Spritzgußwerkzeugs aus Fig. 3.

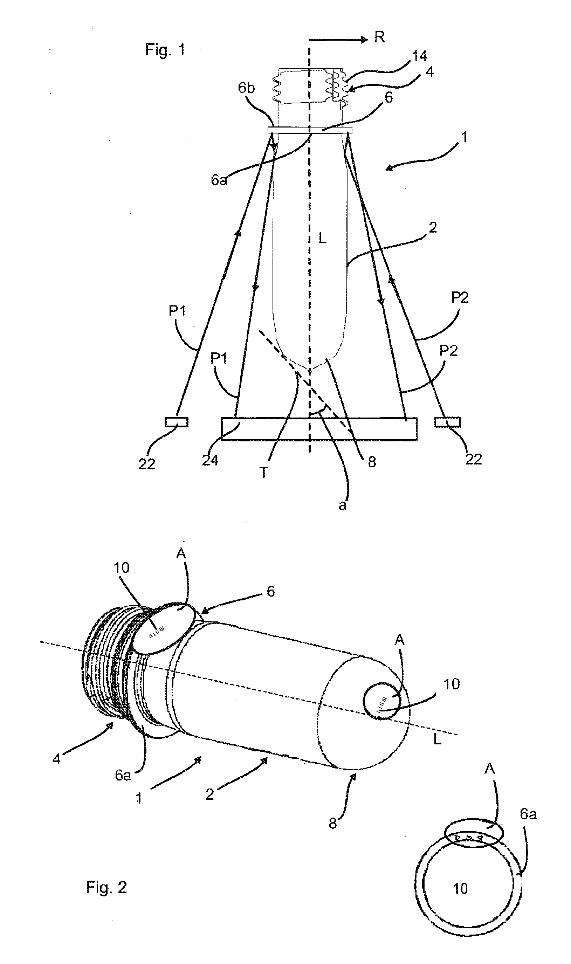

Fig. 1 zeigt eine Seitenansicht eines erfindungsgemäßen Kunststoffvorformlings 1. Dieser Kunststoffvorformling weist dabei einen Grundkörper 2 auf, wobei dieser Grundkörper im Rahmen eines Expansionsvorgangs expandierbar ist sowie einen Gewindebereich 4, der hier einteilig mit dem Grundkörper 2 ausgebildet ist. Der Gewindebereich 4 wird im Rahmen des Expansionsvorgangs nicht verstreckt. Das Bezugszeichen 14 bezieht sich auf einen Gewindegang des Gewindes des Kunststoffvorformlings. Weiterhin weist der Kunststoffvorformling einen ringförmigen Körper, das heißt einen Tragring 6 auf, der wiederum eine nach oben, das heißt dem Gewindebereich 4 zugewandte Oberfläche 6b und eine nach unten, das heißt dem Grundkörper 2 zugewandte Oberfläche 6a aufweist.

Bei Kunststoffvorformlingen aus klarem, wenigstens teildurchsichtigem Material geht bei einer Inspektion der Hauptanteil des Lichts durch den durchsichtigen Tragring 6 hindurch. Dieser Anteil verursacht im Raum, am Gewinde oder an der Haltevorrichtung Störungen, die durch einen polierten Tragering gut sichtbar sind. Um diese Störungen zu mindern, sollte der Hintergrund und die Haltevorrichtung idealerweise eine matte, stark absorbierende und abriebsfeste Oberfläche besitzen. Vollumfängliche Haltevorrichtungen sind ideal, weil sie einen gleichmäßigen Hintergrund für den Tragering bilden - leider sind sie nur eingeschränkt realisierbar.

Der bildbestimmende Lichtanteil ist bei Vorformlingen aus durchsichtigem Material das Reflexlicht. Bei der Inspektion muss deshalb für die Erfüllung der Reflexionsbedingung zwischen Beleuchtung und Beobachtungsrichtung gesorgt werden.

Falls jedoch, wie in einer Ausführungsform vorgeschlagen, der Tragring 6 nicht vollkommen transparent ausgestaltet sondern unpoliert ist, kann Licht an der Oberfläche 6a gleichmäßiger reflektiert werden. Die Pfeilketten P1 und P2 veranschaulichen mögliche Strahlengänge bei der Inspektion dieses Behältnisses bzw. der Unterseite 6a des Tragrings. Dabei wird von Beleuchtungseinrichtungen 22 , wie beispielsweise ringförmig um die Längsrichtung L des Kunststoffvorformlings angeordneten LED's Licht auf den Kunststoffvorformling gerichtet und das reflektierte Licht von einer Kameraeinrichtung 24 aufgenommen und auf diese Weise ein (ortsaufgelöstes) Bild der Unterseite des Kunststoffvorformlings 1 bzw. des Tragrings aufgenommen.

Damit wird das eigentliche Bild jeweils durch eine zweifach Reflexion am Tragring 6 und am Grundkörper 2 des Kunststoffvorformlings 1 erzeugt. Da die Oberflächen (des Grundkörpers 2) ziemlich glänzend sind, entsteht nur ein kleiner Winkelbereich, in dem die Reflexionsbedingungen erfüllt sind. Dies ist der Ansatzpunkt für die Aufnahme der Markierung. Bevorzugt ist daher der Grundkörper 2 des Kunststoffvorformlings poliert.

Bei dem Strahlengang P1 gelangt das Licht zunächst an die Unterseite des Tragrings und wird von dort über den Grundkörper 2 zu der Bildaufnahmeeinrichtung 24 (die beispielsweise als Kamera ausgeführt sein kann) geleitet. Bei dem Strahlengang P2 wird das Licht zunächst an dem Grundkörper 2 reflektiert und gelangt dann über die Unterseite 6b des Tragrings zu der Bildaufnahmeeinrichtung 24. Damit eignet sich der hier beschriebene Kunststoffvorformling insbesondere für eine perizentrische (bzw. vollumfängliche) Beobachtung entlang seiner Längsrichtung L.

Das Bezugszeichen 8 bezieht sich auf einen Kuppenbereich des Kunststoffvorformlings. Dieser Kuppenbereich grenzt damit gleichzeitig den Kunststoffvorformling nach unten hin ab.

In entsprechender Weise kann die gezeigte Optik auch ein Bild des Kuppenbereichs 8 des Kunststoffvorformlings aufnehmen und auf diese Weise die Markierung erfassen bzw. auch eine Drehstellung des Kunststoffvorformlings feststellen.

Das Bezugszeichen a bezeichnet einen Winkel, unter dem sich ein Oberflächenabschnitt A des Kunststoffvorformlings, auf dem eine Markierung angeordnet sein kann, gegenüber der Längsrichtung L des Kunststoffvorformlings 1 erstreckt. Dabei wurde zur Vereinfachung ein Winkel zwischen einer an diesem Oberflächenabschnitt anliegenden Tangente T und der Längsrichtung L angegeben. Tatsächlich ist hier der besagte Oberflächenabschnitt gekrümmt, jedoch würden sämtliche an diesen Oberflächenabschnitt anliegende Tangenten, die in der Figurenebene von Fig. 1 liegen, einen von 0° unterschiedlichen Winkel mit der Längsrichtung L einschließen.

Fig. 2 zeigt eine perspektivische Ansicht eines erfindungsgemäßen Kunststoffvorformlings 1. Dabei erkennt man auch hier Markierungen 10 an der Unterseite 6a des Tragrings 6. Diese Markierungen 10 können mithilfe optischer Inspektionseinrichtungen erfasst werden. Dabei wäre es - wie oben erwähnt - auch möglich, eine Vielzahl von Markierungen anzuordnen, sodass aus diesen Markierungen auf Eigenschaften des Kunststoffvorformlings geschlossen werden kann. Auch wäre es möglich, beispielsweise einen Barcode oder ähnliches an der Unterseite des 6a des Gewindes 6 anzubringen. Daneben ist es umgekehrt auch möglich, eine derartige Codierung 10 auch vorzusehen, damit die Maschine feststellen kann, welcher Kunststoffvorformling sich in der Maschine befindet, wobei hier die Markierung 10 auch für eine Feststellung der Orientierung des Kunststoffvorformlings bezüglich seiner Längsachse L genutzt werden kann. Das untere Teilbild von Fig. 2 zeigt den Tragring 6.

Die Bezugszeichen A beziehen sich jeweils auf mögliche Stellen, an denen die Markierungen 10 aufgebracht sein können. Dabei kann, wie gezeigt, die Markierung 10 entweder an einer Unterseite des Tragrings 6 des Kunststoffvorformlings 10 oder auch in dem Kuppenbereich angeordnet sein. Falls die Markierung in dem Kuppenbereich 8 angeordnet ist, ist es grundsätzlich möglich, diese Markierung überall im Bereich dieser Kuppe anzuordnen, insbesondere in solchen Bereichen, die außerhalb des Anspritzpunktes liegen. Daneben sind jedoch auch andere Bereiche zum Anbringen der Markierung denkbar denkbar, wie beispielsweise zwischen den Gewindegängen, and den Mündungbereichsflächen oder jedweder anderer Oberfläche des Vorformlings.

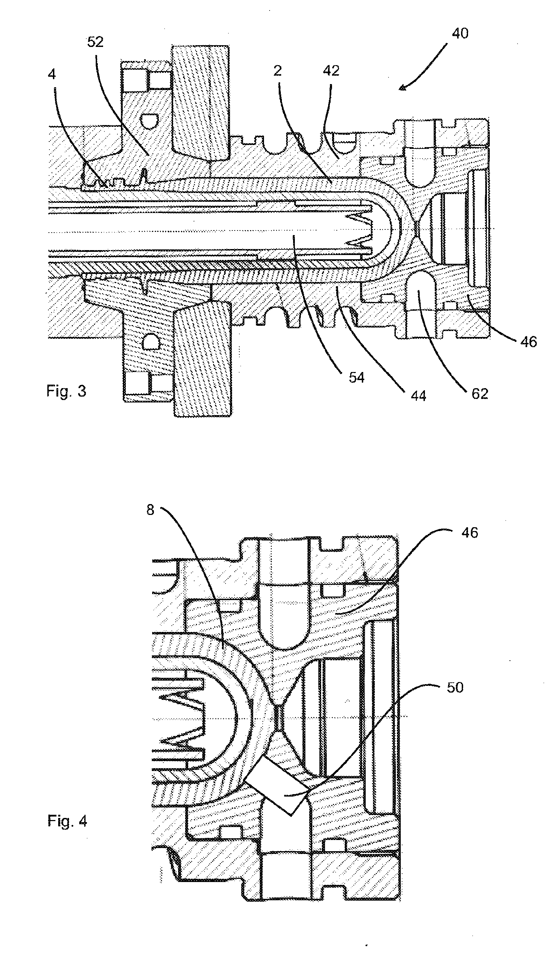

Fig. 3 zeigt eine Spritzgußform zum Herstellen eines erfindungsgemäßen Kunststoffvorformlings. Dabei bezieht sich das Bezugszeichen 42 auf ein erstes Formteil und das Bezugszeichen 44 auf ein zweites Formteil. Das Bezugszeichen 46 kennzeichnet ein Bodenteil, welches gemeinsam mit den Formteilen 42 und 44 in einem Aufnahmeraum zur Bildung des Kunststoffvorformlings ausbildet. Der Kunststoffvorformling ist hier wieder mit dem Bezugszeichen 10 versehen.

Daneben weist die Spritzgußform einen Gewindeerzeugungsabschnitt 52 auf, um den Gewindebereich 4 des Kunststoffvorformlings 10 zu erzeugen.

Das Bezugszeichen 62 bezieht sich auf eine Nut zum Kühlen des Bodenteils 46 und das Bezugszeichen 54 auf einen Formkörper bzw. Kern, der während der Erzeugung des Kunststoffvorformlings zwischen den Formteilen 42 und 44 liegt, um in dem dazwischen liegenden Raum den Kunststoffvorformling 10 auszubilden.

Fig. 4 zeigt eine Detaildarstellung des in Fig. 3 gezeigten Spritzgießwerkzeugs. Man erkennt hier zusätzlich ein Stempelelement 50, mit dem die in Fig. 2 gezeigte Markierung während des Spritzgießens aufgebracht werden kann. Dabei ist dieses Stempelelement 50 entfernbar an dem Bodenteil 46 angeordnet und kann daher bei Bedarf durch andere Stempelelemente ersetzt werden. Ein entsprechendes Stempelelement könnte auch in dem Gewindeerzeugnisabschnitt vorgesehen sein, um eine Markierung in dem Tragring 6 vorzusehen. Dabei können sowohl polierte, als auch unpolierte Markierungen mit Hilfe der unterschiedlichen Stempel erzeugt werden. Daneben wäre es auch denkbar, dass das Stempeleelment an dem Formkörper bzw. dem Kern 54 angeordnet ist, um so Markierungen an der Innenoberfläche des Kunststoffvorformlings anzubringen. Weiterhin wäre es auch möglich, dass mehrere Stempelelemente vorgesehen sind, um mehrere Markierungen an dem Kunststoffvorformling anzubringen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Kunststoffvorformling
- 2: Grundkörper
- 4: Gewindebereich
- 6: Tragring, Gewinde
- 6a: Oberfläche
- 6b: Oberfläche, Unterseite
- 8: Kuppenbereich
- 10: Markierung, Codierung
- 14: Gewindegang
- 22: Beleuchtungseinrichtungen
- 24: Kameraeinrichtung, Bildaufnahmeeinrichtung
- 40: Spritzgussform
- 42: erstes Formteil
- 44: zweites Formteil
- 46: Bodenteil
- 50: Stempelelement
- 52: Gewindeerzeugungsabschnitt
- 54: Formkörper, Kern
- 62: Nut
- A: mögliche Stellen für Markierungen
- L: Längsrichtung
- P1: Pfeilketten
- P2: Pfeilketten, Strahlengang
- a: Winkel
- T: Tangente

## Patentansprüche

1. Kunststoffvorformling (1), mit einem Grundkörper (2), einem an dem Grundkörper angeordneten Gewindebereich (4), wobei der Gewindebereich (4) einteilig mit dem Grundkörper (2) ausgebildet ist und wobei der Grundkörper (2) einen diesen abschließenden Kuppenbereich (8) aufweist,
wobei
der Kunststoffvorformling (1) eine Markierung (10) aufweist, welche für wenigstens eine Eigenschaft des Kunststoffvorformlings (1) charakteristisch ist,
**dadurch gekennzeichnet, dass**
die Markierung (10) eine in dem Oberflächenabschnitt (A) ausgebildete Ausnehmung oder Erhebung ist.

2. Kunststoffvorformling nach Anspruch 1,
**dadurch gekennzeichnet, dass**
das Kunststoffbehältnis einen wenigstens abschnittsweise ringförmigen Abschnitt (6), der unterhalb des Gewindebereichs (4) angeordnet ist und sich in einer radialen Richtung (R) des Kunststoffbehältnisses (1) nach aussen erstreckt und der einteilig mit dem Grundkörper (2) ausgebildet ist, aufweist, wobei der ringförmige Abschnitt (6) eine erste dem Grundkörper (2) zugewandte Oberfläche (6a) und eine zweite dem Gewindebereich (4) zugewandte Oberfläche (6b) aufweist.

3. Kunststoffvorformling nach wenigstens einem der vorangegangenen Ansprüche,
**dadurch gekennzeichnet, dass**
diese Markierung (10) an einem in einer Längsrichtung (L) des Kunststoffvorformlings (10) unterhalb des Gewindebereichs (4) liegenden Oberflächenabschnitt (A) des Kunststoffvorformlings (1) angeordnet ist,

4. Kunststoffvorformling nach wenigstens einem der vorangegangenen Ansprüche,
**dadurch gekennzeichnet, dass**
die Markierung an einem vorgegebenen Oberflächenabschnitt des Kunststoffbehältnisses (1) angeordnet ist wobei sich dieser Oberflächenabschnitt (A) in einem von 0° abweichenden Winkel bezüglich der Längsrichtung (L) des Kunststoffvorformlings erstreckt.

5. Kunststoffvorformling nach Anspruch 1,
**dadurch gekennzeichnet, dass**
dass der Oberflächenabschnitt Bestandteil der ersten Oberfläche (6a), des Kuppenbereichs (8) oder der zweiten Oberfläche (6b) ist.

6. Kunststoffvorformling nach wenigstens einem der vorangegangenen Ansprüche,
**dadurch gekennzeichnet, dass**
die Markierung mittels einer Beobachtungseinrichtung beobachtbar ist, welche den Kunststoffvorformling (1) in dessen Längsrichtung (L) beobachtet.

7. Kunststoffvorformling (1) nach wenigstens einem der vorangegangenen Ansprüche,
**dadurch gekennzeichnet, dass**
der ringförmige Abschnitt (6) wenigstens abschnittsweise unpoliert ist.

8. Kunststoffvorformling (1) nach wenigstens einem der vorangegangenen Ansprüche,
**dadurch gekennzeichnet, dass**
die Markierung (10) poliert ist.

9. Kunststoffvorformling (1) nach wenigstens einem der vorangegangenen Ansprüche,
**dadurch gekennzeichnet, dass**
der Kunststoffvorformling (10) ein Spritzgusssteil (10) ist.

10. Kunststoffvorformling (1) nach wenigstens einem der vorangegangenen Ansprüche,
**dadurch gekennzeichnet, dass**
die charakteristische Eigenschaft aus eine Gruppe von Eigenschaften ausgewählt ist, welche geometrische Daten des Kunststoffvorformlings, ein Gewicht des Kunststoffvorformlings, ein Material des Kunststoffvorformlings, eine Farbe des Kunststoffvorformlings, ein Herstellungsdatum des Kunststoffvorformlings, einen Herstellerdes Kunststoffvorformlings, einen Rohstoff des Kunststoffvorformlings, maschinenbezogene Freigabeinformationen, Kombinationen hieraus und dergleichen enthält.

11. Kunststoffvorformling (1) nach wenigstens einem der vorangegangenen Ansprüche,
**dadurch gekennzeichnet, dass**
die Markierung (10) in einem zu verstreckenden oder einem nicht zu verstreckenden Bereich des Kunststoffvorformlings (10) angeordnet ist.

12. Kunststoffvorformling (1) nach wenigstens einem der vorangegangenen Ansprüche,
**dadurch gekennzeichnet, dass**
wenigstens ein Teil der Markierung (10) zur Feststellung einer Drehstellung des Kunststoffvorformlings (10) bezüglich seiner Längsachse dient.

13. Spritzgussform (40) zum Herstellen eines Kunststoffvorformlings (1) nach Anspruch 1, mit wenigstens drei Formteilen (42, 44, 46), welche einen Aufnahmeraum zur Aufnahme eines zu formenden Materials ausbilden, mit einem Gewindeerzeugungsabschnitt (52) zur Erzeugung des Gewindebereichs (4) des Kunststoffvorformlings (10) und mit einem zwischen wenigstens zwei Formteilen (42, 44) angeordneten Formkörper (54) zur Erzeugung des Hohlraums des Kunststoffvorformlings (10), wobei das zu formende Material zwischen die Formteile (42, 44) und den Formkörper (54) einführbar ist, um eine Wandung des Kunststoffvorformlings (10) auszubilden
**dadurch gekennzeichnet, dass**
in wenigstens einem Formteil (42, 44, 46) oder dem Gewindeerzeugungsabschnitt (52) ein Stempelelement (50) angeordnet ist, welches zur Erzeugung der Markierung (10) geeignet ist.

14. Spritzgussform nach Anspruch 13,
**dadurch gekennzeichnet, dass**
das Stempelelement (50) entfernbar in dem Formteil (42, 44, 46) angeordnet ist.

## Claims

1. A plastic preform (1), comprising a base body (2), a threaded area (4) disposed on the base body, said threaded area (4) being integrally formed with the base body (2), said base body (2) having a dome area (8) terminating said base body (2),
wherein the plastic preform (1) comprises a marking (10) that is characteristic of at least one property of the plastic preform (1), **characterised in that** the marking (10) is a recess or an elevation formed in the surface section (A).

2. The plastic preform as claimed in claim 1,
**characterised in that** the plastic preform comprises an annular section (6) at least in sections, said annular section being disposed below the threaded area (4) and extending outwards in a radial direction (R) of the plastic preform (1) and being integrally formed with the base body (2), said annular section (6) including a first surface (6a) facing the base body (2) and including a second surface (6b) facing the threaded area (4).

3. The plastic preform as claimed in at least one of the preceding claims,
**characterised in that** said marking (10) is positioned on a surface section (A) of the plastic preform (1), which surface section is disposed below the threaded area (B) in a longitudinal direction (L) of the plastic preform (1).

4. The plastic preform as claimed in at least one of the preceding claims,
**characterised in that** the marking is positioned on a specified surface section of the plastic preform (1), said surface section (A) extending at an angle of non-zero in relation to the longitudinal direction (L) of the plastic preform.

5. The plastic preform as claimed in claim 1,
**characterised in that** the surface section is part of the first surface (6a), of the dome area (8) or of the second surface (6b).

6. The plastic preform as claimed in at least one of the preceding claims,
**characterised in that** the marking can be monitored by means of a monitoring device that monitors the plastic preform (1) in the longitudinal direction (L) thereof.

7. The plastic preform (1) as claimed in at least one of the preceding claims,
**characterised in that** the annular section (6) is unpolished at least in sections.

8. The plastic preform (1) as claimed in at least one of the preceding claims,
**characterised in that** the marking (10) is polished.

9. The plastic preform (1) as claimed in at least one of the preceding claims,
**characterised in that** the plastic preform (10) is an injection moulded element (10).

10. The plastic preform (1) as claimed in at least one of the preceding claims,
**characterised in that** the characteristic property is selected from a group of properties including geometric data of the plastic preform, a weight of the plastic preform, a material of the plastic preform, a colour of the plastic preform, a manufacturing date of the plastic preform, a manufacturer of the plastic preform, a raw material of the plastic preform, machine-related release information, combinations thereof and the like.

11. The plastic preform (1) as claimed in at least one of the preceding claims,
**characterised in that** the marking (10) is provided in an area of the plastic preform (10) that is to be stretched or in one that is not to be stretched.

12. The plastic preform (1) as claimed in at least one of the preceding claims,
**characterised in that** at least part of the marking (10) is used to determine a rotary position of the plastic preform (10) in relation to the longitudinal axis thereof.

13. An injection mould (40) for manufacturing a plastic preform (1) as claimed in claim 1, comprising at least three mould parts (42, 44, 46) which form a receiving cavity for receiving a material to be moulded, including a thread production section (52) for producing the threaded area (4) of the plastic preform (10) and a mould body (54) disposed between at least two mould parts (42, 44) for generating the cavity of the plastic preform (10), wherein the material to be moulded can be introduced between the mould parts (42, 44) and the mould body (54) in order to form a wall of the plastic preform (10),
**characterised in that** a stamp element (50) is provided in at least one mould part (42, 44, 46) or the thread production section (52), which stamp element is suitable for generating the marking (10).

14. The injection mould as claimed in claim 13,
**characterised in that** the stamp element (50) is removably disposed in the mould part (42, 44, 46).

## Revendications

1. Préforme en matière plastique (1), avec un corps de base (2), une zone filetée (4) présente sur le corps de base, la zone filetée (4) étant réalisée d'un seul tenant avec le corps de base (2) et le corps de base (2) présentant une zone en calotte (8) à son extrémité,
ladite préforme en matière plastique (1) étant pourvue d'une marque (10) caractéristique pour au moins une propriété de la préforme en matière plastique (1),
**caractérisée en ce que**
la marque (10) est un évidement ou un relief formé dans la partie de surface (A).

2. Préforme en matière plastique selon la revendication 1, **caractérisée en ce que**
le récipient en matière plastique présente un segment (6) au moins partiellement annulaire situé en dessous de la zone filetée (4) et qui s'étend vers l'extérieur dans la direction radiale (R) du récipient en matière plastique (1) et est formé d'un seul tenant avec le corps de base (2), ledit segment annulaire (6) présentant une première surface (6a) opposée au corps de base (2) et une deuxième surface (6b) opposée à la zone filetée (4).

3. Préforme en matière plastique selon au moins une des revendications précédentes, **caractérisée en ce que**
ladite marque (10) est présentée sur une partie de surface (A) de la préforme en matière plastique (1) située en dessous de la zone filetée (4) dans une direction longitudinale (L) de la préforme en matière plastique (10).

4. Préforme en matière plastique selon au moins une des revendications précédentes, **caractérisée en ce que**
la marque est présentée sur une partie de surface définie du récipient en matière plastique (1), ladite partie de surface (A) s'étendant suivant un angle déviant de 0° par rapport à la direction longitudinale (L) de la préforme en matière plastique.

5. Préforme en matière plastique selon la revendication 1, **caractérisée en ce que**
la partie de surface fait partie de la première surface (6a), de la zone en calotte (8) ou de la deuxième surface (6b).

6. Préforme en matière plastique selon au moins une des revendications précédentes, **caractérisée en ce que**
la marque peut être observée au moyen d'un dispositif d'observation qui visualise la préforme en matière plastique (1) dans la direction longitudinale (L) de celle-ci.

7. Préforme en matière plastique (1) selon au moins une des revendications précédentes, **caractérisée en ce que**
le segment annulaire (6) est au moins partiellement non poli.

8. Préforme en matière plastique (1) selon au moins une des revendications précédentes, **caractérisée en ce que**
la marque (10) est polie.

9. Préforme en matière plastique (1) selon au moins une des revendications précédentes, **caractérisée en ce que**
ladite préforme en matière plastique (10) est une pièce moulée par injection (10).

10. Préforme en matière plastique (1) selon au moins une des revendications précédentes, **caractérisée en ce que**
la propriété caractéristique est sélectionnée dans un groupe de propriétés qui comprend des données géométriques de la préforme en matière plastique, un poids de la préforme en matière plastique, un matériau de la préforme en matière plastique, une couleur de la préforme en matière plastique, une date de fabrication de la préforme en matière plastique, un fabricant de la préforme en matière plastique, une matière première de la préforme en matière plastique, des informations de validation relatives à la machine, des combinaisons de celles-ci, et des propriétés similaires.

11. Préforme en matière plastique (1) selon au moins une des revendications précédentes, **caractérisée en ce que**
la marque (10) est présentée dans une zone à étirer ou à ne pas étirer de la préforme en matière plastique (10).

12. Préforme en matière plastique (1) selon au moins une des revendications précédentes, **caractérisée en ce qu'**
au moins une partie de la marque (10) sert à fixer une position de rotation de la préforme en matière plastique (10) par rapport à son axe longitudinal.

13. Moule à injection (40) pour la fabrication d'une préforme en matière plastique (1) selon la revendication 1, avec au moins trois pièces de moule (42, 44, 46) qui forment un compartiment de réception pour recevoir un matériau à former, avec une partie de génération de filet (52) pour générer la zone filetée (4) de la préforme en matière plastique (10) et avec un corps de moule (54) disposé entre au moins deux pièces de moule (42, 44) pour générer la cavité de la préforme en matière plastique (10), le matériau à former étant insérable entre les pièces de moule (42, 44) et le corps de moule (54) pour réaliser une paroi de la préforme en matière plastique (10),
**caractérisé en ce qu'**
un élément d'estampage (50) est présenté dans au moins une pièce de moule (42, 44, 46) ou la partie de génération de filet (52), lequel est apte à générer la marque (10).

14. Moule à injection selon la revendication 13, **caractérisé en ce que**
l'élément d'estampage (50) est disposé de manière amovible dans la pièce de moule (42, 44, 46).
